(19)

Europäisches
Patentamt
European
Patent Office
Office européen
des brevets

(11) **EP 2 680 271 A1**

(12) **EUROPEAN PATENT APPLICATION**

(43) Date of publication:
**01.01.2014 Bulletin 2014/01**

(51) Int Cl.:
***G21B 1/19*** *(2006.01)*     ***G21B 3/00*** *(2006.01)*

(21) Application number: **12173401.6**

(22) Date of filing: **25.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Holmlid, Leif
412 96 Göteborg (SE)**

(72) Inventor: **Holmlid, Leif
412 96 Göteborg (SE)**

(74) Representative: **Edlund, Fabian et al
Awapatent AB
P.O. Box 11 394
404 28 Göteborg (SE)**

(54) **Method and apparatus for generating energy through inertial confinement fusion**

(57)  The present invention relates to a method of generating energy by nuclear fusion. The method comprises the steps of: bringing (100) hydrogen in a gaseous state into contact with a hydrogen transfer catalyst (14) configured to cause a transition of the hydrogen from the gaseous state to an ultra-dense state; collecting (101) the hydrogen in the ultra-dense state on a carrier (3) configured to substantially confine the hydrogen in the ultra-dense state within a fuel collection portion (16) of the carrier; transporting (102) the carrier to an irradiation location (9); and subjecting (103), at the irradiation location, the hydrogen in the ultra-dense state to irradiation having sufficient energy to achieve break-even in energy generation by nuclear fusion.

Fig. 1

# Description

## Field of the invention

The present invention relates to a method and apparatus for generating energy through inertial confinement fusion.

## Background of the invention

Fusion is one of the candidates for future large scale generation of energy without the emission problems associated with burning fossil fuel and the fuel disposal problem of traditional fission nuclear power.

Research into energy generation using fusion follows a number of parallel tracks. Most effort is currently spent on developing reactors for magnetic confinement fusion and inertial confinement fusion (ICF).

In inertial confinement fusion, a small pellet (usually referred to as "target") containing, for example, Deuterium (D) ice or Deuterium-Tritium (D-T) ice is irradiated with lasers to compress and heat the target sufficiently to initiate a fusion reaction inside the target. The target may be irradiated directly by UV-lasers. There is also an indirect approach, where a so-called hohlraum is irradiated with lasers so that the target is in turn irradiated with X-ray radiation from the hohlraum.

In current large scale research systems for ICF, a large number of very high energy laser beams are focused on the target in a gigantic target chamber. Because of various issues including instabilities inside the target, considerably more energy than was previously expected appears to be necessary to achieve so-called ignition, making it difficult to achieve a commercially viable inertial confinement fusion energy power plant.

In order to address some of the problems associated with ICF, it has been proposed to provide a target made of a denser form of hydrogen, so-called ultra-dense hydrogen. It has been demonstrated that ultra-dense deuterium can be formed by flowing deuterium gas through the pores of a hydrogen transfer catalyst. The formation of ultra-dense protium has also been reported elsewhere. It is expected that a target made of such ultradense hydrogen (protium, deuterium or tritium) should require considerably less irradiated energy for ignition than the currently used deuterium-tritium ice pellets. The formation of ultra-dense deuterium is, for example, reported in the article "Efficient source for the production of ultradense deuterium D(-1) for laser-induced fusion (ICF)" by P. U. Andersson, B. Lönn and L. Holmlid, Review of Scientific Instruments 82, 013503 (2011). Although the results in this article provide a useful background, further development is required to achieve laser induced fusion using ultra-dense hydrogen targets.

## Summary

It is an object of the present invention to address the above, and to provide for energy generation using ultra-dense hydrogen as a target for inertial confinement fusion (ICF).

According to a first aspect of the present invention, it is therefore provided a method of generating energy, comprising the steps of bringing hydrogen in a gaseous state into contact with a hydrogen transfer catalyst configured to cause a transition of the hydrogen from the gaseous state to an ultra-dense state; collecting the hydrogen in the ultra-dense state on a carrier configured to substantially confine the hydrogen in the ultra-dense state within a fuel collection portion of the carrier; transporting the carrier to an irradiation location; and subjecting, at the irradiation location, the hydrogen in the ultradense state to irradiation having sufficient energy to achieve break-even.

"Hydrogen" should, in the context of the present application, be understood to include any isotope or mix of isotopes where the nucleus has a single proton. In particular, hydrogen includes protium, deuterium, tritium and any combination of these.

By hydrogen in an "ultra-dense state" should, at least in the context of the present application, be understood hydrogen in the form of a quantum material (quantum fluid) in which adjacent nuclei are within one Bohr radius of each other. In other words, the nucleus-nucleus distance in the ultra-dense state is considerably less than 50 pm. In the following, hydrogen in the ultradense state will be referred to as H(-1) (or D(-1) when deuterium is specifically referred to). The terms "hydrogen in an ultra-dense state" and "ultra-dense hydrogen" are used synomymously throughout this application.

A "hydrogen transfer catalyst" is any catalyst capable of absorbing hydrogen gas molecules ($H_2$) and dissociating these molecules to atomic hydrogen, that is, catalyze the reaction $H_2 \rightarrow 2H$. The name hydrogen transfer catalyst implies that the so-formed hydrogen atoms on the catalyst surface can rather easily attach to other molecules on the surface and thus be transferred from one molecule to another. The hydrogen transfer catalyst may further be configured to cause a transition of the hydrogen into the ultradense state if the hydrogen atoms are prevented from re-forming covalent bonds. The mechanisms behind the catalytic transition from the gaseous state to the ultra-dense state are quite well understood, and it has been experimentally shown that this transition can be achieved using various hydrogen transfer catalysts, including, for example, commercially available so-called styrene catalysts, as well as (purely) metallic catalysts, such as Iridium and Palladium. It should be noted that the hydrogen transfer catalyst does not necessarily have to transition the hydrogen in the gaseous state to the ultra-dense state *directly* upon contact with the hydrogen transfer catalyst. Instead, the hydrogen in the gaseous state may first be caused to transition to a dense state H(1), to later spontaneously transition to the ultra-dense state H(-1). Also in this latter case has the hydrogen transfer catalyst caused the hydrogen to transition from the gaseous state to the ultra-dense state.

In the dense state H(1), which is a higher-energy state than the ultradense state, the distance between adjacent nuclei is around 150 pm.

That ultra-dense hydrogen has actually been formed can be determined by irradiating the result of the catalytic reaction with a laser and then measuring the time of flight of emitted particles. An example of such determination will be described in greater detail under the heading "Experimental results" further below.

That the hydrogen in the ultra-dense state (the H(-1)) is "substantially confined" within the fuel collection portion of the carrier should be understood to mean that the concentration of H(-1) is substantially higher within the fuel collection portion of the carrier than outside that portion. This can readily be determined using the above-mentioned time of flight measurement.

The properties of ultra-dense hydrogen and methods for causing gaseous hydrogen to transition to ultra-dense hydrogen using different types of hydrogen transfer catalysts, as well as methods for detecting the presence and location of ultra-dense hydrogen, have been studied extensively by the present inventor and others. Results of these studies have, for example, been published in:

S. Badiei, P.U. Andersson, and L. Holmlid, Int. J. Hydrogen Energy 34, 487 (2009);
S. Badiei, P.U. Andersson, and L. Holmlid, Int. J. Mass. Spectrom. 282, 70 (2009);
L. Holmlid, Eur. Phys. J. A 48 (2012) 11; and
P.U. Andersson, B. Lönn, and L. Holmlid, Review of Scientific Instruments 82, 013503 (2011).

Each of these scientific articles is hereby incorporated by reference in its entirity.

"Break-even" in fusion has been achieved when the particles (ions, neutrons and photons) emitted following irradiation of the ultra-dense hydrogen together exhibit a kinetic energy and photon energy that is at least two times the energy of the irradiation, i.e. when a net energy output is obtained. The requirement for break-even is normally fulfilled when the ion kinetic energy observed in the experiments is higher than the energy of the irradiation, since the summed emitted photon energy and neutron kinetic energy is expected to be larger than the total ion energy.

The present invention is based on the realization that energy generation above break-even can be achieved if a sufficient amount of ultradense hydrogen can be collected and transported to an irradiation location. Since the ultra-dense hydrogen is superfluid, it is difficult to keep in place and transport. The present inventor has, however, further realized that the carrier can be configured to substantially confine the ultra-dense hydrogen within a portion of the carrier. In this manner, a sufficient amount of the ultra-dense hydrogen, arranged within a limited target area, can be transported to the irradiation location, where it can be irradiated so that fusion occurs and highly energetic particles are emitted with sufficient kinetic energy to achieve break-even. In particular, the ultra-dense hydrogen can hereby be provided in a sufficiently thick layer, such as at least 1 $\mu$m, to fulfill predicted requirements for ignition and an energy gain of 1000 or more.

The fuel collection portion may advantageously be a surface portion of the carrier having different properties than a surrounding surface portion. It should, however, be noted that there may well be other ways in which the carrier may be configured to substantially confine the ultra-dense hydrogen, and that many different material combinations etc can achieve the desired substantial confinement (that is, a substantially higher concentration of ultradense hydrogen within the fuel collection portion than outside the fuel collection portion).

It should, furthermore, be noted that a substantially higher concentration of ultra-dense hydrogen within the fuel collection portion of the carrier than outside the fuel collection portion can be directly and positively verified using the time-of-flight measurement which was mentioned above and which will be described in detail further below under the heading "Experimental results".

According to various embodiments of the present invention, the step of collecting may comprise the step of allowing the hydrogen to fall from the hydrogen transfer catalyst to the carrier.

In these embodiments, the hydrogen in the gaseous state may be brought into contact with the hydrogen transfer catalyst by flowing the hydrogen in the gaseous state through a conduit having the hydrogen transfer catalyst arranged at a catalyst site along the conduit such that the hydrogen in the gaseous state partly flows past the hydrogen transfer catalyst and partly is caused to transition to the ultra-dense state at the catalyst site.

While falling down to the fuel collection portion of the carrier arranged below the hydrogen transfer catalyst, the hydrogen may temporarily transition to a higher energy state, such as the H(1)-state, but will transition back to the ultra-dense state (H(-1)) on the fuel collection portion of the carrier.

The hydrogen transfer catalyst may advantageously be porous, so that the hydrogen in the gaseous state can flow through the pores. This will provide for a large contact area between the hydrogen gas and the hydrogen transfer catalyst. At the same time, however, flow through the pores only will limit the attainable flow rate and thus the rate of production of ultra-dense hydrogen.

The present inventor has now surprisingly found that flow through the pores of the hydrogen transfer catalyst is not necessary for causing the transition of the hydrogen from the gaseous state to the ultra-dense state, but that the hydrogen transfer catalyst is capable of causing this transition at a larger distance and more efficiently than was previously believed. Accordingly, the hydrogen gas can be allowed to flow over a surface of the hydrogen transfer catalyst rather than be forced to flow *through* the hydrogen transfer catalyst. This has been shown to provide for a greatly increased rate in the production of ultra-dense hydrogen, which may contribute to achieving the layer thickness that is expected to be beneficial for reaching ignition and substantial energy gain.

Thus, according to various embodiments, a cross-sectional area of the conduit, at the catalyst site, may be greater than a cross-sectional area of the hydrogen transfer catalyst, so that the hydrogen in the gaseous state can flow through the conduit without having to pass through an interior of the hydrogen transfer catalyst. The hydrogen transfer catalyst may, for example, be arranged so that there is a flow gap between the hydrogen transfer catalyst and the inner wall of the conduit. Alternatively or in combination, the hydrogen transfer catalyst may itself be tubular, so that a conduit is formed through the hydrogen transfer catalyst.

As an alternative or complement to the above-described embodiments where the ultra-dense hydrogen is allowed to fall onto the fuel collection  portion of the carrier, the carrier may comprise hydrogen transfer catalyst material arranged at the fuel collection portion, and hydrogen in the gaseous state may be brought into contact with the hydrogen transfer catalyst by flowing the hydrogen in the gaseous state past the fuel collection portion of the carrier.

This may further increase the conversion rate from hydrogen gas to ultra-dense hydrogen, and/or may facilitate the design of an apparatus for performing various embodiments of the method according to the invention.

To utilize the energy generated following irradiation, the method may further comprise the step of decelerating particles released following irradiation of the hydrogen in the ultra-dense state, to thereby convert kinetic energy of the particles to thermal energy.

According to a second aspect of the present invention, there is provided an apparatus for generating energy, comprising: a source of hydrogen in a gaseous state; a hydrogen transfer catalyst arranged to be subjected to a flow of the hydrogen in the gaseous state, the hydrogen transfer catalyst being configured to cause a transition of the hydrogen from the gaseous state to an ultra-dense state; a carrier for collecting the hydrogen in the ultra-dense state, the carrier being configured to substantially confine the hydrogen in the ultra-dense state within a fuel collection portion of the carrier; a transportation arrangement for transporting the carrier from a fuel deposition location to an irradiation location; and an irradiation source arranged and configured to provide irradiation having sufficient energy to achieve break-even at the irradiation location.

According to various embodiments, the fuel collection portion of the carrier may be a surface portion that is surrounded by a barrier surface portion of a different material than the fuel collection portion.

It has been found that different materials interact differently with ultradense hydrogen and that some materials promote condensation of ultradense hydrogen, while other materials more or less prevent condensation thereon of ultra-dense hydrogen. The present inventor has realized that this finding can be used to provide a fuel target of ultra-dense hydrogen that has a substantial thickness, such as at least 1 $\mu$m, which is expected to fulfill predicted requirements for ignition and an energy gain of 1000 or more.

The reasons why some materials can support a larger amount of ultradense hydrogen than other materials are not yet fully understood. It has, however, been found that when ultra-dense hydrogen is allowed to fall from the hydrogen transfer catalyst onto a carrier comprising a metal or metal oxide surface portion surrounded by polymer (organic or inorganic) surface portion, the density of ultra-dense hydrogen is substantially higher on the metal (or metal oxide) than on the (organic or inorganic) polymer.

It is, however, expected that several other material combinations will provide the desired result, and it should again be noted that a substantially higher concentration of ultra-dense hydrogen within the fuel collection portion of the carrier than outside the fuel collection portion can be directly and positively verified using the time of flight measurement which was mentioned above and which will be described in detail further below under the heading "Experimental results".

According to various embodiments, furthermore, the fuel collection portion may be located in a recess in the carrier, which is expected to further facilitate the formation and subsequent transportation of a sufficiently thick layer of ultra-dense hydrogen.

Regarding the transportation arrangement in various embodiments of the apparatus according to the present invention, it should be noted that this transportation arrangement may utilize any way of moving the carrier from the fuel deposition location to the irradiation location. For example, the carrier may be transported to the irradiation location using a conveyor, or the fuel deposition location may be situated directly above the irradiation location and the carrier may be allowed to fall down from the deposition location to the irradiation location.

Further embodiments of, and effects obtained through this second aspect of the present invention are largely analogous to those described above for the first aspect of the invention.

Brief description of the drawings

These and other aspects of the present invention will now be described in more detail, with reference to the appended drawings showing example embodiments of the invention, wherein:

Fig 1 schematically illustrates an apparatus according to an embodiment of the present invention;

Fig 2 is a cross-section of the carrier used in the apparatus in fig 1;

Fig 3 is a flow-chart schematically illustrating an exemplary method of generating energy using the apparatus in fig 1;

Fig 4 is a schematic illustration of an exemplary measurement setup for determining the relative density of ultra-dense hydrogen on a carrier;

Fig 5 shows a sample carrier with a metal surface portion and an organic polymer surface portion adjacent to the metal surface portion;

Fig 6 is a diagram that indicates the presence of hydrogen in different states on the positions schematically indicated in fig 5;

Fig 7 is a schematic illustration of another exemplary measurement setup for determining the effects of subjecting the ultra-dense hydrogen on the carrier to laser irradiation; and

Fig 8 is a diagram that indicates the particle energy distribution resulting from irradiation of the ultra-dense hydrogen using the measurement setup in fig 7.

Detailed description of example embodiments

In the present detailed description, various embodiments of an apparatus and a method for generating energy through irradiation of ultradense hydrogen are mainly discussed with reference to an apparatus in which hydrogen gas flows past a hydrogen transfer catalyst arranged in a conduit and the ultra-dense hydrogen is allowed to fall onto the carrier. Furthermore, the carrier is described as a plastic plate with a metalized recess, and the carrier is allowed to fall into an irradiation chamber following deposition of the ultra-dense hydrogen fuel. In the irradiation chamber, the ultra-dense hydrogen fuel is irradiated using a laser beam.

It should be noted that this by no means limits the scope of the present invention which is equally applicable to other configurations of the apparatus and other embodiments of the method. For example, hydrogen transfer catalyst may be arranged on the carrier, the carrier may be configured differently and/or be made of different materials. For instance, the carrier may be made of glass which is partly coated with a metal or a metal oxide. Moreover, the carrier may be transported to the irradiation location using a conveyor and the ultra-dense hydrogen fuel may be irradiated using another kind of beam, such as an ion beam or an X-ray beam.

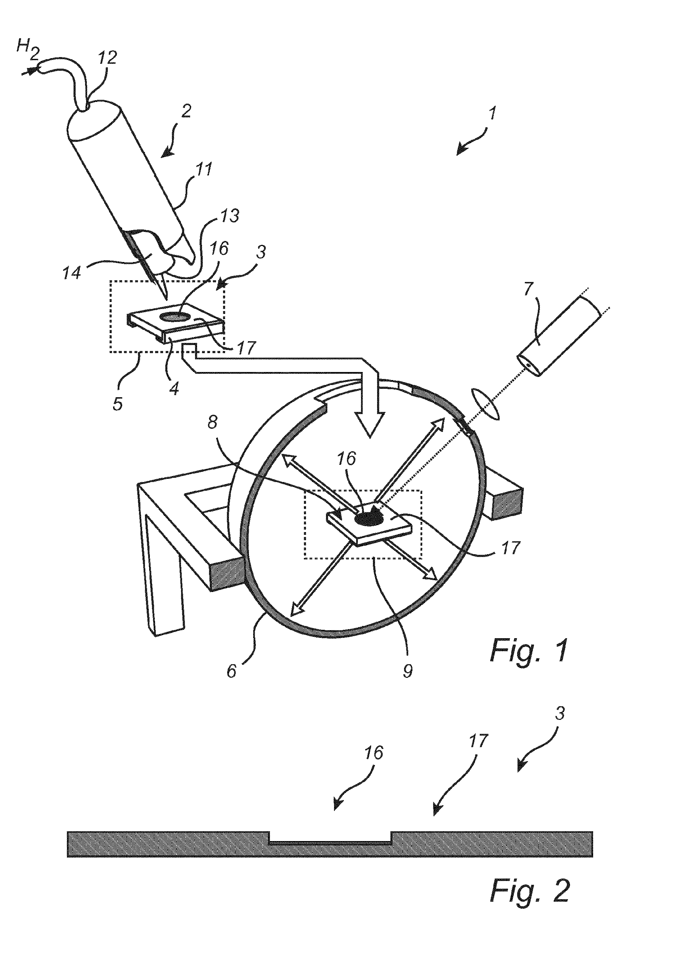

Fig 1 is a schematic illustration of an example embodiment of the apparatus for generating energy according to the present invention.

With reference to fig 1, the energy generating apparatus 1 comprises a source (not shown) of hydrogen in a gaseous state, a fuel source 2, a first carrier 3, a controllable holder 4 for holding the first carrier 3 at a fuel deposition location 5, an irradiation chamber 6 and an irradiation source, here in the form of a laser 7 to irradiate ultra-dense hydrogen fuel deposited on a second carrier 8 at an irradiation location 9.

Depending on application, the source of hydrogen gas may be a gas container or some other source of hydrogen gas. The fuel source 2 comprises a metal conduit 11 with an inlet 12 connected to the hydrogen gas source and an outlet 13 arranged above the first carrier 3. Between the inlet 12 and the outlet 13, at a catalyst site, at least one hydrogen transfer catalyst 14 is arranged so that the hydrogen gas can flow through and around the hydrogen transfer catalyst 14. The hydrogen transfer catalyst 14 is configured to cause a transition of the hydrogen gas to ultra-dense hydrogen. According to various embodiments of the present invention, the hydrogen transfer catalyst 14 may be a commercially available styrene catalyst.

In the exemplary embodiment schematically illustrated in fig 1, there is a first carrier 3 at the fuel deposition location 5 and a second carrier 8 at the irradiation location 9. It should be noted that carriers may be present simultaneously at the fuel deposition location 5 and the irradiation location 9 as indicated in fig 1, or only one carrier may be processed (provided with fuel or irradiated) at a time. It would also be feasible to, for example, provide the apparatus 1 with several fuel sources that would sequentially feed the irradiation chamber with fuel-filled carriers.

As is schematically indicated in fig 1, each of the first carrier 3 and the second carrier 8 comprises a fuel collection portion 16 surrounded by a barrier portion 17. Each of the first carrier 3 and the second carrier 8 is configured to substantially confine the ultra-dense hydrogen within the fuel collection portion 16. An exemplary configuration of the carriers 3 and 8 will be described in more detail below with reference to fig 2.

As was mentioned above, the first carrier 3 rests on a controllable holder 4 while the first carrier 3 is at the fuel deposition location 5. When a sufficient amount of ultra-dense hydrogen has been deposited on the first carrier 3 (and the irradiation chamber 6 is ready to receive a new carrier), the holder 4 is controlled to allow the carrier 3 to fall down to the irradiation location 9 inside the irradiation chamber 6.

At the irradiation location 9, the ultra-dense hydrogen is irradiated by the laser 7 and the particles emitted as a result of the irradiation (schematically indicated by the block arrows inside the irradiation chamber 6) are stopped by the chamber walls. The deceleration of the particles generates heat, which can be used to drive a conventional steam cycle generation of electricity. Since the particular method used for converting the kinetic energy of the particles to electrical energy is not central to the present invention and further should be well within the reach of one of ordinary skill in the art, this will not be described in further detail herein.

Turning now to fig 2, which is a schematic cross-section view of an exemplary carrier 3, the carrier 3 comprises, as was already touched upon above in connection with fig 1, a fuel collection portion 16 and a barrier portion 17 surrounding the fuel collection portion.

As is schematically illustrated in fig 2, the fuel collection portion 16 is arranged in a recess in the carrier 3. The bottom of the recess is coated with a material that promotes the formation of the ultra-dense state (H(-1 )) to a higher degree than the material at the surface of the barrier portion 17.

Through this selection of materials in the fuel collection portion 16 and the barrier portion 17, respectively, ultra-dense hydrogen will be substantially confined to the fuel collection portion 16. By providing the fuel collection portion at the bottom of a recess, the formation of a thick layer, such as more than 1 $\mu$m thick, is further facilitated.

The material in the fuel collection portion 16 may, for example, be a metal, such as steel or titanium, and the material at the surface of the barrier portion 17 may be any organic or inorganic polymer, such as, for example, PTFE, PMMA or PE. It should, however, be emphasized that it is expected that many other material combinations can provide the desired substantial confinement of the ultra-dense hydrogen to the fuel collection portion. For instance, it is expected that also many metal oxides will function to retain the ultra-dense hydrogen and that the barrier portion may, for example, be made of glass. One of ordinary skill in the art will be able to determine, without undue burden, if ultra-dense hydrogen is actually substantially confined at the fuel collection portion 16 by performing the time of flight experiment described below under the heading "Experimental results".

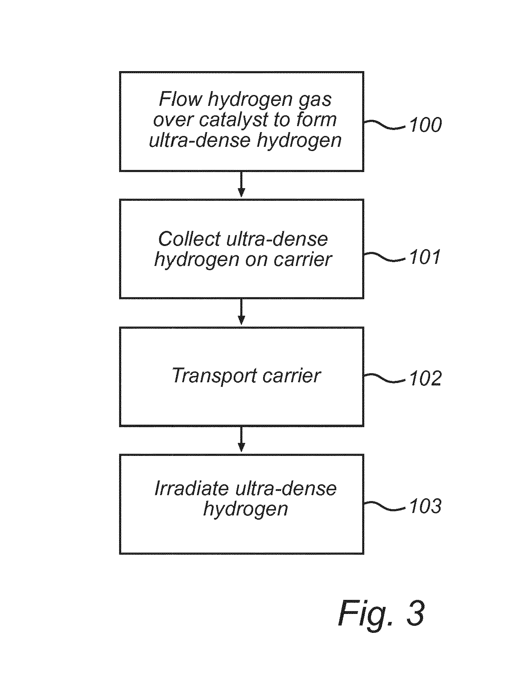

An example embodiment of the method of generating energy according to the present invention will now be described with reference to the flow-chart in fig 3 and to the apparatus in fig 1.

In a first step 100, hydrogen gas, H$_2$, is made to flow over a hydrogen transfer catalyst 14 configured to cause the hydrogen gas to transition to ultra-dense hydrogen, H(-1). The hydrogen transfer catalyst may, for example, be a commercial so called styrene catalyst, i.e. a type of solid catalyst used in the chemical industry for producing styrene (for plastic production) from ethylene benzene. This type of catalyst is made from porous Fe-O material with several different additives, especially potassium (K) as so called promoter. However, it has been shown that other catalysts, such as Pt-catalysts or Ir-catalysts can be used to convert hydrogen gas to ultra-dense hydrogen. A brief account of the current understanding of the mechanism behind the conversion from hydrogen gas to ultra-dense hydrogen will be provided further below under the heading "Theoretical discussion".

In the subsequent step 101, the ultra-dense hydrogen H(-1) is collected on the carrier 3, which is arranged at the fuel deposition location 5.

When a sufficient amount of ultra-dense hydrogen H(-1) has been collected on the carrier (it is expected that a layer of at least 1 $\mu$m should be formed at the fuel collection portion 16 of the carrier 3), the carrier 3 is transported to the irradiation location 9 inside the irradiation chamber 6 in step 102. As was mentioned above, the carrier 3 may be transported from the fuel deposition location 5 to the irradiation location 9 in various ways. For instance, as was briefly discussed above in connection with fig 1, the carrier 3 may be dropped into the irradiation chamber 6. Alternatively, the carrier 3 may be carried from the fuel deposition location 5 to the irradiation location 9 using a conveyor, such as a conveyor belt. There should be no doubt that one skilled in the art will understand that there are many different ways in which the carrier can be moved from the fuel deposition location 5 to the irradiation location 9.

When the carrier 3 has reached the irradiation location 9, the ultradense hydrogen H(-1) at the fuel collection portion 16 of the carrier 3 is irradiated in step 103. The ultra-dense hydrogen may be irradiated using, for example, a laser beam provided by the laser 7, but other types of irradiation may be used instead of laser irradiation. For example, the ultra-dense hydrogen may be irradiated using one or several ion beams or X-ray beams. To reach break-even, the irradiation should have sufficient energy. The requirements and experimental results regarding this will be discussed further below under the headings "Theoretical discussion" and "Experimental results".

The person skilled in the art realizes that the present invention by no means is limited to the preferred embodiments described above. On the contrary, many modifications and variations are possible within the scope of the appended claims, for example pressure pulsing of the hydrogen gas may be used in the source 2 in fig 1 to deposit ultra-dense hydrogen in a more controlled and rapid way on the carrier.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

Theoretical discussion

*General and ultra-dense hydrogen*

The main obstacle preventing the widespread use of laser-ignited or high-energy particle-ignited nuclear fusion for energy generation is the difficulty to contain the fusion plasma for a long enough period so that efficient ignition and fuel burning is possible. Various methods have been used to heat and compress a gas target or initially frozen (hydrogen ice) target to high pressures and temperatures. These methods have all so far failed to reach ignition since the pressure in the plasma during heating to the required temperature of 50-100 MK becomes too high for confinement. The plasma becomes unstable which leads to expansion and subsequent cooling. This prevents ignition of nuclear fusion.

Using the so called Lawson Criterion for D-T fusion (which is the fusion reaction that most effort in the world is directed towards at present), the general condition for the density $\rho$ of the target and its radius R is

$$\rho\, R \geq 0.1 - 1 \text{ g cm}^{-2}$$

This means that with a density of solid fuel (hydrogen ice) of 0.2 gcm$^{-3}$, the radius of the fuel needed is approximately 1.5 cm. This will require an enormous power in the laser to heat the fuel to 50 MK. The Stefan-Boltzmann law requires a radiation flux of at least $4 \times 10^{19}$ W cm$^{-2}$ at this temperature, or a laser power of $>3 \times 10^{20}$ W for a fuel target of 1.5 cm radius. Such a power cannot be obtained economically. If the fuel target can be compressed a factor of 1000 to a density of 0.2 kg cm$^{-3}$, the required size of the target will be much smaller with a radius of 15 $\mu$m, and the laser power is approximately $3 \times 10^{14}$ W, still very high but possible for a large laser. Ultra-dense hydrogen has a density of 50-200 kg cm$^{-3}$ which means that the target radius can be as small as 20 nm, requiring a laser power of $6 \times 10^{8}$ W. With a pulse length of 5 ns as for many standard pulsed lasers, the energy required in the pulse is 2.9 J (if radiative and other losses are neglected). This amount of energy can be delivered by an ordinary table-top laser.

With a homogeneous material as ultra-dense deuterium, the fusion process possible is D+D which has a smaller cross section and thus a larger energy requirement for reaching ignition. The advantages from an environmental and radioactivity point of view are however very large for this concept, since tritium (which is radioactive and difficult to handle safely) is not used as a fuel. The condition for such a material becomes

$$\rho\, R \geq 10 \text{ g cm}^{-2}$$

which for ultra-dense deuterium means $6 \times 10^{11}$ W with a target size of 700 nm. Using a pulse time of 100 ps means 60 J and pulse time 1 ps (which decreases radiative heat losses) means 0.6 J which is possible rather easily.

Another approach to the Lawson Criterion is more explicitly related to the so-called confinement time. In the case of the D+D reaction, it is cited to be n T $\geq 10^{22}$ m$^{-3}$ s. The bond distance in the ultra-dense deuterium is found by experiments to be 2.3 pm, which gives a maximum density n for a well-ordered material of $8 \times 10^{34}$ m$^{-3}$. This means that the Lawson Criterion is fulfilled for ultra-dense deuterium with a confinement time T as short as $2 \times 10^{-13}$ s. This time corresponds to thermal motion of a free atom over a distance as small as 20 pm and the real confinement time for any reasonable arrangement will be much longer than this.

It has recently been calculated *(see* F. Winterberg, "Ultradense Deuterium". J. Fusion Energy. 29, 317 (2010*) and* F. Winterberg, "Ultra-dense deuterium and cold fusion claims". Phys. Lett. A 374, 2766 (2010*))* that for ignition of D+D fusion in ultra-dense deuterium 1.5 kJ in the laser pulse is required for ignition due to the higher ignition temperature for pure deuterium fusion. This would ignite 400 ng of deuterium. It was also calculated that a gain of 1000 or an energy output of 1 MJ requires a deuterium mass of 3 $\mu$g. It was further suggested that a suitable shape of the fuel would be a flat disc pellet with a thickness of $>1$ $\mu$m. This fuel pellet will have a very small size, of the order of a few $\mu$m due to the extreme density of the material.

The initial laser process in ultra-dense deuterium has been demonstrated to release fast deuterons in the material, with a temperature of 15 MK. Thus, a large amount of energy is selectively released in the laser impact by so called Coulomb explosions. We have also observed a process called laser-induced self-compression which releases a large number of MeV particles (e.g. deuterons) under suitable conditions of the laser pulse rate and material properties. Both these effects will decrease the energy required for ignition. We have made several studies of the number of fast particles released in the ultra-dense deuterium and studied also the increase in the number of particles formed during an increase of laser power. It is shown that the number of fast particles increases rapidly with laser power, as the sixth power of the laser power (pulse energy). Computational studies of the laser pulse energy required for break-even exist *(see* S.A. Slutz and R.A. Vesey, "Fast ignition hot spot break-even scaling". Phys. Plasmas 12 (2005) 062702*).* These studies yield a pulse energy around 1 J at break-even. In our experiments, break-even is indeed observed at 1 J pulse energy. From break-even to an energy gain of 1000, a further factor of at least 4 in laser pulse energy is required. We conclude that the available information agrees that useful power output from nuclear fusion in ultra-dense hydrogen will be found at laser pulse energy of 4 J - 1 kJ. Such a pulse energy is feasible.

At a rate of one carrier foil per second carrying 3 $\mu$g ultra-dense deuterium giving fusion ignition, the energy output of a power station using this method is approximately 1 MW. This would use 95 g of deuterium per year to produce 9 GWh, or one 5 liter gas bottle at 100 bar standard pressure. By using several lines of target carrier production, several laser lines or a higher repetition rate laser, the output of the power station can be scaled relatively easily.

*Catalytic conversion*

The catalytic process may employ commercial so called styrene catalysts, i.e. a type of solid catalyst used in the chemical industry for producing styrene (for plastic production) from ethylene benzene. This type of catalyst is made from porous Fe-O material with several different additives, especially potassium (K) as so called promoter. The function of this catalyst has been studied in detail.

The catalyst is designed to split off hydrogen atoms from ethyl benzene so that a carbon-carbon double bond is formed, and then to combine the hydrogen atoms so released to hydrogen molecules which easily desorb thermally from the catalyst surface. This reaction is reversible: if hydrogen molecules are added to the catalyst they are dissociated to hydrogen atoms which are adsorbed on the surface. This is a general process in hydrogen transfer catalysts. We utilize this mechanism to produce ultra-dense hydrogen, which requires that covalent bonds in hydrogen molecules are not allowed to form after the adsorption of hydrogen in the catalyst.

The potassium promoter in the catalyst provides for a more efficient formation of ultra-dense hydrogen. Potassium (and for example other alkali metals) easily forms so called circular Rydberg atoms $K^*$. In such atoms, the valence electron is in a nearly circular orbit around the ion core, in an orbit very similar to a Bohr orbit. At a few hundred °C not only Rydberg states are formed at the surface, but also small clusters of Rydberg states $K_N^*$, in a form called Rydberg Matter (RM). This type of cluster is probably the active form of the potassium promoter in normal industrial use of the catalyst.

The clusters $K_N^*$ transfer part of their excitation energy to the hydrogen atoms at the catalyst surface. This process takes place during thermal collisions in the surface phase. This gives formation of clusters $H_N^*$ (where H indicates proton, deuteron, or triton) in the ordinary process also giving the $K_N^*$ formation, namely cluster assembly during the desorption process. If the hydrogen atoms could form covalent bonds, molecules $H_2$ would instead leave the catalyst surface and no ultra-dense material could be formed. In the RM material, the electrons are not in s orbitals since they always have an orbital angular momentum greater than zero. This implies that covalent bonds cannot be formed since the electrons on the atoms must be in s orbitals to form the normal covalent sigma ($\sigma$) bonds in $H_2$. The lowest energy level for hydrogen in the form of RM is metallic (dense) hydrogen called H(1), with a bond length of 150 picometer (pm). The hydrogen material falls down to this level by emission of infrared radiation. Dense hydrogen is then spontaneously converted to ultra-dense hydrogen called H(-1) with a bond distance of 2-4 pm depending on which particles (protons, deuterons, tritons) are bound. This material is a quantum material (quantum fluid) which probably involves both electron pairs (Cooper pairs) and nuclear pairs (proton, deuteron or triton pairs, or mixed pairs). These materials are probably both superfluid and superconductive at room temperature, as predicted for ultra-dense deuterium and confirmed in recent experiments.

## Experimental results

### Fuel confinement

In the following, an exemplary experimental setup and method for determining the density distribution of ultra-dense hydrogen across a surface will be described. The experimental setup and method can be used to determine, without undue burden, if a carrier is configured to substantially confine ultra-dense hydrogen in a fuel collection portion or not.

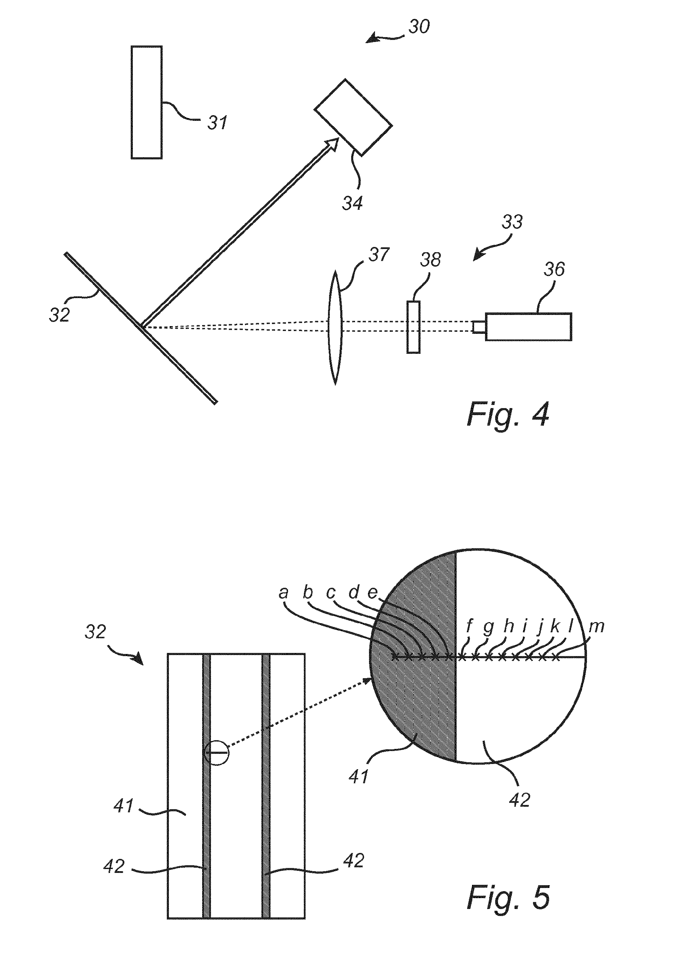

The experimental setup 30 in fig 4 has been partly described in several publications, for example in P.U. Andersson and L. Holmlid, Phys. Lett. A 375, 1344 (2011) (not complete figure) and P. U. Andersson, B Lönn and L. Holmlid, Rev. Sci. Instrum. 82, 013503 (2011) (not sloping target). The experimental setup 30 comprises a fuel source 31, a carrier sample 32, a laser arrangement 33 and a detector 34. The fuel source 31 is arranged above the carrier sample 32 so that ultra-dense hydrogen can fall down onto the carrier sample 32. The laser arrangement 33, which comprises a laser 36, a lens 37 and a beam deflector 38 is arranged to allow irradiation of different locations on the carrier sample 32, so that the surface of the carrier sample 32 can be scanned by the laser beam. The detector 34 is arranged to detect neutral particles emitted from the carrier sample 32 when the carrier sample 32 is irradiated by the laser beam.

The base pressure in the experimental setup 30 is $<1\times10^{-6}$ mbar. The fuel source is similar as that described above with reference to fig 1 and comprises a cylindrical (extruded) sample of an industrial iron oxide hydrogen transfer catalyst (not shown in fig 4) doped with K (initially at 8 wt %). It is of the styrene catalyst type Shell S-105 which is an efficient hydrogen abstraction and transfer catalyst. The hydrogen transfer catalyst is mounted in a metal tube which is connected to a $D_2$ gas feed. The metal tube is heated by an AC current through its wall up to 400 K. Deuterium gas (> 99.8 % $D_2$) is admitted through the tube at a pressure up to $1\times10^{-5}$ mbar in the chamber.

The D(-1) formed falls down to the carrier sample 32. The D(-1) phase is at a slightly lower energy level than the higher, dense state D(1), which means that it will be formed spontaneously.

The laser 36 used was a Nd:YAG laser with an energy of <200 mJ per each 5 ns long pulse at 10 Hz. The laser 36 was operated at at 532 nm. The laser beam is focused at the carrier sample 32 with an f = 400 mm spherical lens 37. The intensity in the beam waist of (nominally) 30 $\mu$m diameter is relatively low, $\leq4\times10^{12}$ W cm$^{-2}$ as calculated for a Gaussian beam. In front of the focusing lens 37, a glass plate 38 in a precision rotation mount is used to shift the laser beam slightly in the horizontal direction. The total shift possible with this beam shift construction is close to 0.7 mm, and the shift between two consecutive measured points on the surface is close to 50 $\mu$m.

The detector 34 is a dynode-scintillator-photomultiplier setup, which is described in further detail in the paper S. Badiei and L. Holmlid, J. Phys. B: At. Mol. Opt. Phys. 39, 4191 (2006). The detector 34 is here located at an angle of 45° from the incoming laser beam and measures the time-of-flight (TOF) spectra of fast neutral or ionized particles from the Coulomb explosion (CE) process since no accelerating voltage is employed. The fast particles (schematically indicated by the block arrow in fig 4) impact on a stainless steel (catcher) foil in the detector 34, and fast ions ejected from there are drawn towards a Cu-Be dynode held at -7.0 kV inside the detector. The total effective flight distance for the ions from the laser focus to the catcher foil is 101 mm by direct measurement and internal calibration. The photomultiplier (PMT) is Electron Tubes 9128B with single electron rise time of 2.5 ns and transit time of 30 ns. Blue glass filters in front of the PMT decrease the observed laser signal. A fast preamplifier (Ortec VT120A, gain 200, bandwidth 10-350 MHz) is used. The signal from the PMT is collected in a multi-channel scaler (EG&G Ortec Turbo-MCS) with dwell time 5 ns per channel. Each MCS spectrum consists of a sum of the signals from 300 consecutive laser shots.

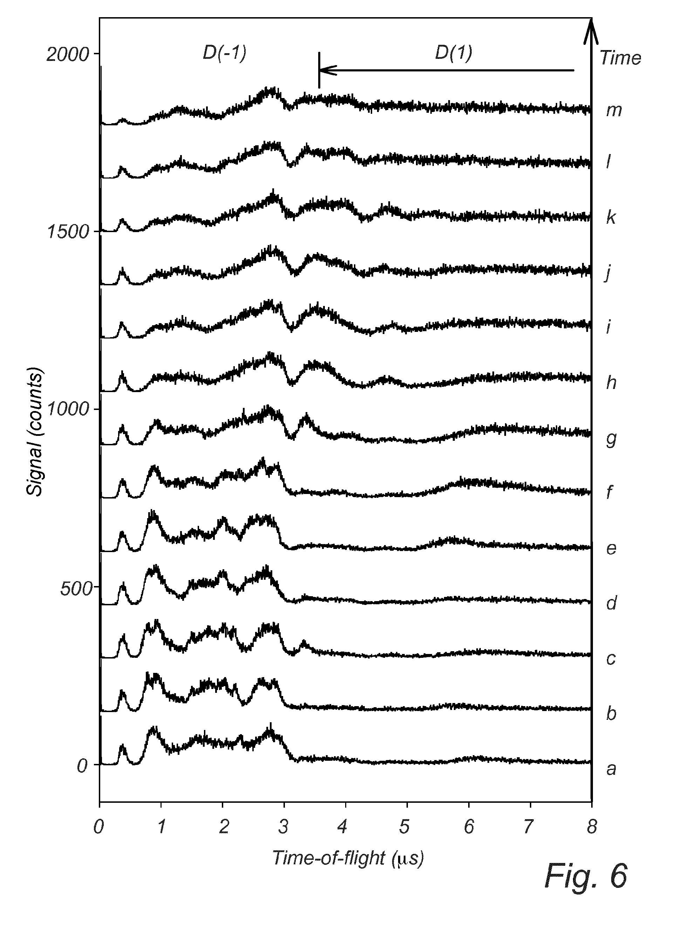

In fig 5, the carrier sample 32 used in various experiments is shown in more detail. As can be seen in fig 5, the carrier sample comprises a base 41 and at least one overlying material portion 42 arranged on the base. In the experiment described herein, the base 41 was made of PMMA and the overlying material portion 42 was made of stainless steel. To get an indication of the spatial distribution of ultra-dense hydrogen (in this case D(-1)) the glass plate 38 between the lens 37 and the carrier sample 32 was successively rotated to focus the laser beam on different locations on the carrier sample 32. In particular, the laser beam was gradually shifted from the overlying metal portion 42 to the base 41 as is schematically indicated in the enlarged portion of fig 5. The focus points are indicated by letters a to m, and these letters will also be used to label the diagrams in fig 6.

When a laser pulse passes through a material like D(1) or D(-1), the photons may excite (displace) a few electrons so that two ions become exposed to each other. Coloumb explosion (CE) makes the ions move apart rapidly, in < 1 fs for D(-1). When the CE takes place, the ions fly apart with almost all their repulsion energy as kinetic energy release (KER) in the ionic fragments. It is possible to determine the initial repulsion energy between the ions by measuring the kinetic energy of the fragments at a large distance from the actual explosion event. Then, the distance between the ions before the CE i.e. the bond length is found directly from the Coulomb formula as

$$r = \frac{1}{4\pi\varepsilon_0} \frac{e^2}{E_{kin}}$$

where $\varepsilon_0$ is the vacuum permittivity, e the unit charge and $E_{kin}$ the sum kinetic energy for the fragments (KER) from the CE. The fraction of the KER that is observed on each fragment depends of course on the mass ratio of the fragments. The kinetic energy is determined most easily by measuring the time-of-flight (TOF) of the particles and converting this quantity to kinetic energy. This requires that the mass of the particle is known or can be inferred, which is simplified when working with only deuterium.

Accordingly, a time-of-flight spectrum (TOF-spectrum) can be used to determine the relation between D(-1) and D(1) at the particular location where the laser beam is focused on the carrier sample 32. In particular if the TOF-spectrum indicates mainly particles having a TOF corresponding to the bond length associated with D(-1), then the density of D(-1) is relatively high at the location where the laser beam hits the carrier sample 32.

Fig 6 is a diagram with a sequence of TOF-spectra corresponding, from bottom to top in fig 6, to the focus locations a to m indicated in the enlarged portion of fig 5.

As can be seen in fig 6, the focus locations a to e on the metal surface portion 42 indicate substantially more D(-1) than the focus locations g to m on the PMMA surface portion 41. It is also clear that the proportion of D(1) is substantially higher on the PMMA surface portion 41 than on the metal surface portion 42. Fig 6 thus clearly indicates that the carrier sample 32 is configurec to substantially confine ultra-dense hydrogen (D(-1)) on the metal surface portion 42.

*Break-even*

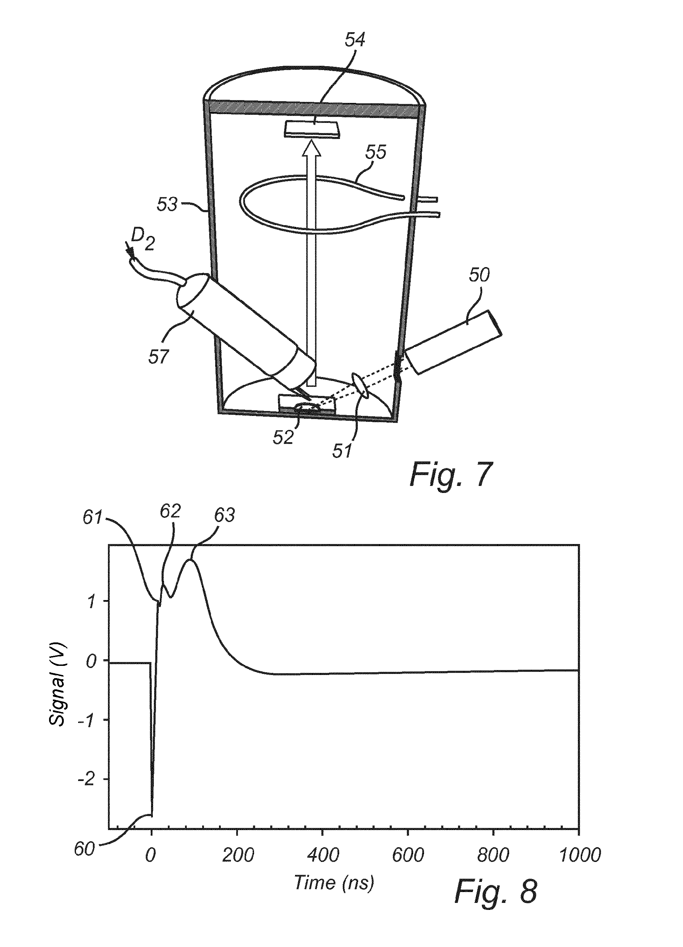

The layout of the experiment is shown in Fig. 7. A Nd:YAG laser 50 with pulse energy of <0.9 J was used, with 7 ns long pulses at 1064 nm and 10 Hz repetition rate. The laser beam was focused with an f = 50 mm lens 51 on the D(-1) target 52 in a small vacuum chamber 53. The $D_2$ gas pressure in the chamber 53 is around 1 mbar with constant pumping. Ultra-dense hydrogen (D(-1)) is formed using a source 57 such as that described above.

A plane 3 mm thick Al collector 54 is mounted at a distance of 44 cm from the target 52, above an internal wire loop 55 for observing the current ejected. It has a diameter of 80 mm and is connected directly to a 300 MHz oscilloscope (not shown) via a short 50 Ω coaxial cable. The impedance of the oscilloscope input is 50 Ω. Thus 1 V signal corresponds to 20 mA of current.

Typical signals at the collector are shown in Fig. 8. The first negative peak 60 is due to electrons ejected from the chamber walls by ionizing photons. To be able to reach the collector 54 from the surrounding walls in a few ns, the electrons need to be ejected with somewhat more than 10 eV energy. If they instead were ejected from the target 52, they would need 10 keV energy to reach the collector in a few ns. However, in such a case a negative peak at the collector would be observed even with the collector at - 24 V which is not found. It is concluded that the negative signal peak at the collector is due to electrons released from the structure of the vacuum chamber by ionizing photons.

The positive signal in fig 8 is caused by fast particles which eject electrons with a few eV from the collector. This is concluded from experiments with +24 or -24 V at the collector. The peaks 61, 62 in the collector signal in Fig. 8 are at 12 and 24 ns after the electron peak 60, corresponding to approximately 7 and 2 MeV u$^{-1}$. The secondary emission coefficients in Al for such energetic protons are somewhat smaller than unity. The true positive signal to the collector thus appears to be a factor of approximately two larger than shown. The large peak 63 at 80-100 ns (at a few hundred keV energy) is due to scattered and backscattered particles (protons) from the D(-1) layer. The slowly varying negative signal after the peaks 61, 62 and 63 is due to electrons which drift to the collector 54 from the target 52 with relatively low energy.

The collector signal shows clearly that MeV particles are ejected from the laser target 52. The process for this is D+D fusion and the particles ejected are protons and deuterons (from collisions with protons). It is not expected that neutrons will be observed in the collector signal due to the weak interaction with the Al material. Both channels in D+D fusion are expected to contribute to the signal thus giving both 3.02 MeV and 14.7 MeV protons. Deuterons can obtain energies up to 1.3 MeV u$^{-1}$ and 6.5 MeV u$^{-1}$ from linear collisions with fusion generated protons. The MeV peaks normally observed are at 1.8 MeV u$^{-1}$ and 9 MeV u$^{-1}$, but they are not very sharp and particles exist with higher energies. Thus, they correspond to the expected initial protons energies from D+D fusion. These peaks are removed at high deuterium pressure due to gas collisions.

From the size of the peak induced voltage in the internal current loop 55 in Fig. 7, the number of particles ejected can be estimated. Using the dimensions provided above, a voltage of 15 V as observed is found if $7\times10^{15}$ particles ($1.6\times10^{-4}$ As) fly past the loop in 5 ns, which is the approximate laser pulse time. This signal is due to electrons released by the initial photon pulse. Assuming that these electrons have 5 eV energy, the total energy observed in the electrons ejected from the target by ionizing photons is 6 mJ per laser shot. Assuming isotropic emission from the target gives a total energy to electrons of 0.6 J per laser shot.

An energy consideration for the positive MeV particles is more accurate. Since the true signal is of the order of 5 V in 50 $\Omega$ during 100 ns, the charge observed is $1\times10^{-8}$ As or $6\times10^{10}$ ions per laser shot. With a average energy of 3 MeV, this corresponds to 30 mJ energy. Assuming isotropic initial emission and using the collector geometric viewing factor of $2.1\times10^{-3}$ gives 14.5 J per laser shot or $3\times10^{13}$ particles per laser shot. This is considerably larger than the laser pulse energy of 0.9 J and means that fusion is above break-even.

## Claims

1. A method of generating energy, comprising the steps of:

    bringing (100) hydrogen in a gaseous state into contact with a hydrogen transfer catalyst (14) configured to cause a transition of said hydrogen from said gaseous state to an ultra-dense state; collecting (101) said hydrogen in said ultra-dense state on a carrier (3) configured to substantially confine said hydrogen in said ultra-dense state within a fuel collection portion (16) of said carrier; transporting (102) said carrier to an irradiation location (9); and subjecting (103), at said irradiation location, said hydrogen in said ultra-dense state to irradiation having sufficient energy to achieve break-even.

2. The method according to claim 1, wherein said step of collecting comprises the step of:

    allowing said hydrogen to fall from said hydrogen transfer catalyst (14) to said carrier (3).

3. The method according to claim 2, wherein said hydrogen in said gaseous state is brought into contact with said hydrogen transfer catalyst (14) by flowing said hydrogen in said gaseous state through a conduit (11) having said hydrogen transfer catalyst arranged at a catalyst site along said conduit such that said hydrogen in said gaseous state partly flows past said hydrogen transfer catalyst and partly is caused to transition to said ultra-dense state at said catalyst site.

4. The method according to claim 3, wherein a cross-sectional area of said conduit (11), at said catalyst site, is greater than a cross-sectional area of said hydrogen transfer catalyst (14), so that said hydrogen in said gaseous state can flow through said conduit without having to pass through an interior of said hydrogen transfer catalyst.

5. The method according to any one of the preceding claims, wherein said carrier (3) comprises hydrogen transfer catalyst material arranged at said fuel collection portion (16), and said hydrogen in said gaseous state is brought into contact with said hydrogen catalyst by flowing said hydrogen in said gaseous state past said fuel collection portion of the carrier.

**6.** The method according to any one of the preceding claims, further comprising the step of:

> decelerating particles released following irradiation of said hydrogen in said ultra-dense state, to thereby convert kinetic energy of said particles to thermal energy.

**7.** An apparatus (1) for generating energy, comprising:

> a source of hydrogen in a gaseous state;
> a hydrogen transfer catalyst (14) arranged to be subjected to a flow of said hydrogen in said gaseous state, said hydrogen transfer catalyst being configured to cause a transition of said hydrogen from said gaseous state to an ultra-dense state;
> a carrier (3) for collecting said hydrogen in said ultra-dense state, said carrier being configured to substantially confine said hydrogen in said ultradense state within a fuel collection portion (16) of said carrier;
> a transportation arrangement (4) for transporting said carrier from a fuel deposition location (5) to an irradiation location (9); and
> an irradiation source (7) arranged and configured to provide irradiation having sufficient energy to achieve break-even at said irradiation location.

**8.** The apparatus (1) according to claim 7, further comprising a conduit (11) having an inlet (12) connected to said source of hydrogen in said gaseous state, and an outlet (13) arranged above said fuel collection portion (16) of said carrier (3), when said carrier is located at said fuel deposition location (5), wherein said hydrogen transfer catalyst (14) is arranged at a catalyst site along said conduit.

**9.** The apparatus (1) according to claim 8, wherein at least one of said hydrogen transfer catalyst (14) and said conduit (11) is configured in such a way that said hydrogen in said gaseous state is allowed to flow over a bounding surface of said hydrogen transfer catalyst.

**10.** The apparatus (1) according to claim 9, wherein a cross-sectional area of said conduit (11), at said catalyst site, is greater than a cross-sectional area of said hydrogen transfer catalyst (14).

**11.** The apparatus (1) according to any one of claims 7 to 10, wherein said fuel collection portion (16) of said carrier is a surface portion of the carrier having different properties than a surrounding barrier surface portion (17).

**12.** The apparatus (1) according to claim 11, wherein said fuel collection portion (16) has a first material composition and said barrier surface portion (17) has a second material composition different from said first material composition.

**13.** The apparatus (1) according to claim 12, wherein said fuel collection portion (16) comprises a metal or a metal oxide and said barrier surface portion (17) comprises a polymer.

**14.** The apparatus (1) according to any one of claims 11 to 13, wherein said fuel collection portion (16) is located in a recess in said carrier (3).

**15.** The apparatus (1) according to any one of claims 7 to 14, wherein said hydrogen transfer catalyst (14) is arranged in said fuel collection portion (16) of said carrier.

Fig. 1

Fig. 2

Flow hydrogen gas over catalyst to form ultra-dense hydrogen — 100

Collect ultra-dense hydrogen on carrier — 101

Transport carrier — 102

Irradiate ultra-dense hydrogen — 103

*Fig. 3*

Fig. 4

Fig. 5

Fig. 6

*Fig. 7*

*Fig. 8*

EUROPEAN SEARCH REPORT

Application Number

EP 12 17 3401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLOFSON ET AL.: "Superfluid ultra-dense deuterium D(-1) on polymer surfaces: Structure and density changes at a polymer-metal boundary", JOURNAL OF APPLIED PHYSICS, vol. 111, no. 12, 123502, 15 June 2012 (2012-06-15), pages 1-7, XP002687169, USA ISSN: 0021-8979, DOI: 10.1063/1.4729078 | 1-3,6-8, 11-14 | INV. G21B1/19 G21B3/00 |
| Y | * page 2, left-hand column, last paragraph - right-hand column, last paragraph * | 4,5,9, 10,15 | |
| Y,D | ANDERSSON ET AL.: "Efficient source for the production of ultradense deuterium D(-1) for laser-induced fusion (ICF)", REVIEW OF SCIENTIFIC INSTRUMENTS, vol. 82, no. 1, 13503, January 2011 (2011-01), pages 1-8, XP002687170, USA ISSN: 0034-6748, DOI: 10.1063/1.3514985 * page 1, last paragraph - page 2, paragraph 1 * * figure 1 * | 4,9,10 | |

-/--

TECHNICAL FIELDS SEARCHED (IPC)

G21B

The present search report has been drawn up for all claims

| Place of search | Date of completion of the search | Examiner |
|---|---|---|
| The Hague | 14 November 2012 | Capostagno, Eros |

**EUROPEAN SEARCH REPORT**

Application Number

EP 12 17 3401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BADIEI ET AL.: "Experimental observation of an atomic hydrogen material with H-H bond distance of 150 pm suggesting metallic hydrogen", JOURNAL OF PHYSICS: CONDENSED MATTER, vol. 16, no. 39, 6 October 2004 (2004-10-06), pages 7017-7023, XP002687171, UK ISSN: 0953-8984, DOI: 10.1088/0953-8984/16/39/034 * page 7019, paragraph 1 * * figure 1 * | 5,15 | |
| A | BADIEI ET AL.: "Laser-driven nuclear fusion D+D in ultra-dense deuterium: MeV particles formed without ignition", LASER AND PARTICLE BEAMS, vol. 28, no. 2, 2010, pages 313-317, XP008157976, UK ISSN: 0263-0346 * page 314, right-hand column, last paragraph - right-hand column, last paragraph * * figure 1 * | 1,6,7 | TECHNICAL FIELDS SEARCHED (IPC) |
| A | BADIEI SHAHRIAR ET AL: "Production of ultradense deuterium: A compact future fusion fuel", APPLIED PHYSICS LETTERS, AIP, vol. 96, no. 12, 124103, 25 March 2010 (2010-03-25), pages 1-3, XP012130566, AMERICAN INSTITUTE OF PHYSICS, MELVILLE, NY, US ISSN: 0003-6951, DOI: 10.1063/1.3371718 * page 1, left-hand column, paragraph 2 * | 11-15 | |

The present search report has been drawn up for all claims

| Place of search | Date of completion of the search | Examiner |
|---|---|---|
| The Hague | 14 November 2012 | Capostagno, Eros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. U. ANDERSSON ; B. LÖNN ; L. HOLMLID.** Efficient source for the production of ultradense deuterium D(-1) for laser-induced fusion (ICF. *Review of Scientific Instruments,* 2011, vol. 82, 013503
- **S. BADIEI ; P.U. ANDERSSON ; L. HOLMLID.** *Int. J. Hydrogen Energy,* 2009, vol. 34, 487
- **S. BADIEI ; P.U. ANDERSSON ; L. HOLMLID.** *Int. J. Mass. Spectrom.,* 2009, vol. 282, 70
- **L. HOLMLID.** *Eur. Phys. J.,* 2012, vol. A 48, 11
- **P.U. ANDERSSON ; B. LÖNN ; L. HOLMLID.** *Review of Scientific Instruments,* 2011, vol. 82, 013503
- **F. WINTERBERG.** Ultradense Deuterium. *J. Fusion Energy,* 2010, vol. 29, 317
- **F. WINTERBERG.** Ultra-dense deuterium and cold fusion claims. *Phys. Lett.,* 2010, vol. A 374, 2766
- **S.A. SLUTZ ; R.A. VESEY.** Fast ignition hot spot break-even scaling. *Phys. Plasmas,* 2005, vol. 12, 062702
- **P.U. ANDERSSON ; L. HOLMLID.** *Phys. Lett.,* 2011, vol. A 375, 1344
- **P. U. ANDERSSON ; B LÖNN ; L. HOLMLID.** *Rev. Sci. Instrum.,* 2011, vol. 82, 013503
- **S. BADIEI ; L. HOLMLID.** *J. Phys. B: At. Mol. Opt. Phys.,* 2006, vol. 39, 4191